# EUROPEAN PATENT SPECIFICATION

(11) **EP 2 281 745 B1**
(45) Date of publication and mention of the grant of the patent: **05.10.2016**
(21) Application number: 09738259.2
(22) Date of filing: 20.04.2009
(51) Int. Cl.: B64C 1/12, B64C 3/26, F16B 5/07

(54) **COUPLING SYSTEM INTENDED FOR USE BETWEEN CLADDING AND STRUCTURAL ELEMENTS SUPPORTING SAME**
KOPPLUNGSSYSTEM ZUR VERWENDUNG ZWISCHEN VERKLEIDUNGEN UND STRUKTURTRÄGERELEMENTE DAFÜR
SYSTÈME PERMETTANT D'UNIR DES REVÊTEMENTS AUX ÉLÉMENTS STRUCTURAUX QUI LES SUPPORTENT

(30) Priority: 30.04.2008 ES 200801266
(43) Date of publication of application: 09.02.2011
(73) Proprietor: Forplan Metales, S.A., 48200 Durango (Vizcaya) (ES)
(72) Inventor: ESTANCANO ERCILLA, José Antonio, 48200 Durango (Vizcaya) (ES)
(74) Representative: Pons
(86) International application number: PCT/ES2009/000212
(87) International publication number: WO 2009/133222

(56) References cited:
- FR-A- 966 996
- FR-A7- 2 258 775
- GB-A- 548 572
- GB-A- 841 923
- GB-A- 2 393 927
- JP-A- 2003 293 462
- US-A- 2 959 383
- US-A- 2 959 384
- US-A- 2 999 658
- US-A- 3 002 717
- US-A- 3 004 645
- US-A- 3 037 590
- US-A- 3 160 245
- US-A- 3 185 267
- US-A- 3 276 377
- US-A- 3 296 759
- US-A- 3 296 759
- US-A- 3 304 677
- US-A1- 2002 125 371

## Description

### FIELD OF THE INVENTION

The present invention relates to a joining system between linings and the structural elements that support them, particularly applicable to the joint between the linings and resistant structural elements of aircraft, particularly applicable to the aeronautical sector and in general to all those sectors wherein linings consist of thin plates made of specific alloys or compound materials and wherein cleanup, friction minimisation and non-perforation of outer surfaces, due to the weakness that it originates, are desirable basic characteristics.

### BACKGROUND OF THE INVENTION

The document US 3 296 759 A discloses in Figures 1-3 a structure suitable for use in an aircraft, according to the preamble of claim 1.

Upon analysing the types of joints currently used in the metallurgical industry in general, these can be classified under "rivet" joints (here we include any joint that provides a different part having a stress transmission function between the parts to be joined) and welded joints. The good result produced by welded joints is well known in certain industry sectors, such as for example the naval construction sector, automotive sector, etc. However, their applicability is reduced almost by half in the case of sectors such as the aeronautical sector, where the reduction of security factors and therefore the need for full operating predictability, weight and cleanup is crucial; in fact, welds are hardly used in airplanes and only in internal parts with very strict control requirements.

In the current state of the art, the thin plates that constitute the linings of the outer fuselages of airplanes are joined to the inner structural parts by rivets, as they constitute the most predictable type of joint. This technique is used both to join the plates that form the outer linings of airplanes with the formers and stringers that form the resistant structure of the airplane, such as in wings and other surfaces, and to join the ribs with outer linings and, in some cases, with the stringers.

As mentioned earlier, these linings consist of thin plates of aluminium alloys or compound materials having areas along their inner surface where they come into contact with the structural elements that support them, such as formers and stringers, for support and fastening thereof, and with the position of equipment and other elements and components that must be fastened to the lining. The thin lining plates are mechanised along their inner surface, defining recessed areas to reduce their weight, called "bays", which are limited by a network of ribs that constitute the aforementioned contact areas. The internal mechanisation of the plates is generally carried out by means of chemical milling and mechanical milling is currently being used.

At present, thin lining plates are used which are moulded into their final aerodynamic shape by means of stretching or rolling processes, in accordance with the type of deformation to be achieved, during which material is recessed from those areas where it is not needed, in order to fulfil their structural resistance mission, through a chemical milling process. In some assemblies with support surfaces and provided that the technique and availability of material allow it, integral linings are used, particularly on wing surfaces, made of a thicker raw material that is mechanised in some cases to obtain the aerodynamic shapes of the surfaces about five axes on one of its sides and stringers on the other, avoiding the need for riveting. In other cases, the integrated stringers are mechanised about three axes and the desired shape of the part is subsequently achieved by means of a moulding process. This effort, which evidently involves a cost, proves the importance of avoiding rivet joints.

The decision relative to which type of lining to use in a specific case is also conditioned by its manufacturing possibilities, the existence of raw material, its resistant internal structure and, to a certain extent, its production and integration costs.

Outer linings made of compound materials are also used in the aeronautical industry wherein their outer shape is achieved using moulding tools and inner shape, which is similar to metal alloy plates, by overlapping the different fabric layers as required. These linings are also joined to the internal structures by means of rivets. The precision achieved with this technology requires reinforcement of certain areas, where necessary.

Rivet joints require drilling of the outer lining. The bores create a "problem" area because it becomes fragile and can lead to the formation of cracks, loss of pressurisation on connecting the pressurised area of the outer part of the airplane and friction points. These parameters are vital to these types of vehicles. In order to minimise this effect, great care must be taken during the drilling, scarfing, countersinking and assembly processes carried out in these types of joints, closing tolerances to the extent allowed by the available technology, using sealants to ensure watertightness and precision in the drill manufacturing processes and countersinking thereof, so that the rivet heads are adequately camouflaged. All of these requirements that must be incorporated in the design make the manufacturing and assembly work highly meticulous, complicated and expensive.

The chemical milling technique basically consists of attacking a surface, the thickness of which we want to reduce, with acids and protecting those areas that we do not want to reduce by masking in order to maintain their thickness. This attack is carried out inside a vat that contains the acids with controlled parameters, a component of a more complex facility, as its application involves masking operations, trimming of the area to be treated, cleaning, chemical attack and neutralisation for each depth that we want to create.

While any type of linings can be manufactured based on this technology, it is a technique that only allows mechanisation of those surfaces parallel to the attacked face, due to which it is a technology that can only be used when the mechanisation of a large surface and small thickness, always parallel, is required; additionally, it is a process that requires great effort and, moreover, does not fulfil the increasingly stricter environmental requirements. In fact, major builders have announced their intention of abandoning this type of "milling", leading to an evolution towards mechanical milling to produce the same type of parts.

### DESCRIPTION OF THE INVENTION

The object of the present invention is a joining system between the thin plates that form the linings and structural elements that support them, particularly in aircraft, which avoids the aforementioned drawbacks and offers considerable advantages over traditional rivet-based joining systems.

In the system of the invention, as in the case of rivet-based joining systems, the thin plates that constitute the linings have recessed areas or bays in the interior thereof limited by non-recessed strips, of greater thickness, generally straight, that determine a network of ribs positionally coincident with the structural elements for support and fastening thereof. The thin plates that constitute the linings will also have ribs positionally coincident with equipment and other components that must be fastened or related to said linings.

The system of the invention is characterised in that the plates that constitute the linings and structural elements include, along their opposing surfaces, joining means between said plates and structural elements, said joining means forming part of or being obtained from the plates and structural elements themselves. In the system of the invention, the aforementioned joining means consist of male and female tongue-and-groove formations, preferably in dovetail formation. These formations have been disposed along the contact areas between the parts to be joined. For example, in the plates that constitute the linings, along at least part of the ribs that limit the bays, and in the structural elements along the sections coincident with said rib parts.

Dovetail should be understood to be any coupling or joint formed by a male formation in the form of a rib and a female formation in the form of a groove, both having the same cross-section, wherein the cross-section of the male profile increases towards its free longitudinal edge and the cross-section of the female profile increases downwards, in such a manner that the coupling between the male and female formations can only be achieved through insertion at one of its ends and sliding between the formations.

According to another characteristic of the invention, the male and female formations of the lining plates and structural elements will be discontinuous along the sides of the bays, determining projections and recesses in said formations coincident in number, position and dimensions. The male and female formations are coupled together through the opposition and insertion of the projections of one of the formations with the recesses of the other formation and subsequent relative longitudinal sliding between the two formations along a length equal to that of said projections, until the projections of the male formations are positioned behind the projections of the female formations and the recesses of both parts are positioned in opposition to each other.

Although the male and female formations may be indiscriminately disposed on the lining plates or on the structural elements, the male formations will preferably be disposed on the lining plates along the edges of the ribs of said plates, while the female formations will be disposed on the structural elements.

The ribs may be laterally limited by longitudinal edges having a straight profile, generally parallel, the formations being disposed along said longitudinal edges. The longitudinal edges may have a staggered profile, at least along a portion adjacent to their free base, wherein the cross-section of the rib decreases towards said free base, whereupon the formations are disposed along the longitudinal edges of any of the levels, preferably the outermost level.

The formations defined by the joining means will be obtained by mechanical milling of the ribs and structural elements, in the case of metal alloy parts or, in the case of compound material parts, of metal profiles embedded into these parts. Thanks to the advances achieved in the mechanisation of large-scale linings, during mechanisation of the inner surface of the plate for the formation of recessed areas or bays, mechanisation of the corresponding formations for the dovetail joint with the structural elements may be carried out simultaneously. The mechanisation or recessing of the plates may also be carried out by means of chemical milling and then shaping the male and female formations by means of mechanical milling. In the case of linings and structural elements in composites, the male and female formations are disposed on profiles that are embedded into the composite parts themselves during manufacturing thereof.

In order for the parts to maintain their final position once assembled and to avoid longitudinal sliding between the joining means, plastic deformations of the formations can be used, for example of the female part, or structural adhesives or a combination of both.

Although the joining system that is the object of the present invention is particularly applicable to the field of aeronautics, it can also be applied to other sectors where, as mentioned earlier, cleanup, friction minimisation and non-perforation of outer surfaces is a desirable basic characteristic. Additionally, the system of the invention may be applied to the joint between the components of the structure or frame and also for fastening equipment, components and auxiliary elements to the lining.

The system of the invention has considerable advantages over traditional rivet-based joining systems. One of the advantages is the decrease in friction on eliminating the rivets, which allows greater cleanup of the outer lining surface, while avoiding the risk of pressure leaks between the interior and the exterior, with pressurisation losses.

An additional advantage of the system of the invention is that on eliminating the rivet bores the fragile points are also eliminated, in addition to improving the rest of the joint characteristics, maintaining significant resistance to traction and ensuring its resistance to shearing.

Another advantage is the extraordinary simplification of assembly operations on eliminating the drilling and riveting operations, also allowing the use of lighter metallic materials. At the same time, maintenance requirements are reduced on eliminating rivet status revision operations.

An additional advantage of the system of the invention is the reduction in weight due to the elimination of rivets, elimination of material in reinforcements due to the dovetail formations and recessing or crenellation thereof and the elimination of necessary sealants in all orifices in rivet systems. The system of the invention also allows elimination of joining parts, such as those that transversely relate the formers.

Another additional advantage of the system of the invention is the reduction in assembly and production costs on eliminating perforation and rivet positioning times.

The system of the invention also allows lateral joints to be disposed between the consecutive lining plates, when their edges are made to coincide on a structural element, for example on a stringer or rib, whereupon half of the male formation is disposed on each of the lining plates. As mentioned earlier, the male and female formations are discontinuous, defining small crenels along these, which cooperate in the reduction of weight. A greater response to elasticity is also achieved, which represents an advantageous solution for simplifying assembly. The dimensions of the crenellations will depend on the requested resistance requirements and the projections and recesses will preferably have identical plate ribs and structural elements. In general, the recesses may be greater in length than the projections, which will allow an additional reduction in weight.

The system of the invention is particularly applicable to aeronautics, both to the fuselage and wings and other surfaces, such as stabilisers and large-scale fairing. In both ribs and structural elements, shaping of the male and female formations could be carried out on an auxiliary profile that would subsequently be fastened to said ribs or structural elements. Fastening of the auxiliary profile to the ribs could be achieved, for example, by means of dovetail coupling, by sliding the auxiliary profile over the corresponding formation disposed on the ribs. Fastening to the structural elements could be carried out in the same manner or by riveting. The system of the invention could also be used to join the composite parts, by means of mechanical milling of the carbon fibre parts or by embedding metal parts within the fabric covering of the parts. For example, in the case of composite linings, the plates may include an embedded metal profile wherein the male and female formations would previously be disposed for dovetailing.

The system may also include male and female formations having a coincident curved path disposed, for example, in the knots or crosspoints of the plate ribs, and may serve to join a former, stringers and lining at one point by means of rotation.

### BRIEF DESCRIPTION OF THE DRAWINGS

The attached figures show an example of embodiment, the description of which can help to better understand the characteristics and advantages of the system of the invention.

In the drawings:
Figure 1 shows an inner perspective view of part of the fuselage of an airplane wherein the plates that constitute the linings are fastened to the structural elements using the system of the invention.
Figure 2 shows an inner perspective view of one of the lining plates.
Figure 3 shows a cross-sectional view of the fuselage, coincident with one of the formers of the resistant structure, taken along line II-II of figure 1.
Figure 4 shows a partial cross-section of the fuselage, taken along line III-III of figure 3.
Figure 5 shows a partial perspective view of one of the formers of the resistant structure.
Figure 6 corresponds to detail A of figure 5, on an enlarged scale.
Figure 7 shows an inner perspective view of the plates that form the lining, in the area that coincides with the former of figure 5.
Figure 8 corresponds to detail B of figure 7, on an enlarged scale.
Figure 9 shows an exploded perspective view of the joint between a stringer and a lining plate.
Figure 10 shows a cross-sectional view of the projections of the male formations of the lining plates disposed in opposition to the female formations of the structural elements.
Figure 11 shows a cross-sectional view of the recesses of the male formations in opposition to the recesses of the female formations of the structural elements.
Figure 12 shows a cross-sectional view, on a larger scale, of the coupling between the male and female elements that define the joining means between the lining plates and structural elements.
Figure 13 shows a sectional view, taken along line XIII-XIII of figure 12, of the coupling between the male and female elements of the joining means and the opposition between the recesses of the male and female formations.
Figure 14 shows a similar view to that of figure 9, showing the joint between two lining plates.
Figure 15 shows a perspective view of two lining plates joined by means of a stringer.

### DETAILED DESCRIPTION OF AN EMBODIMENT

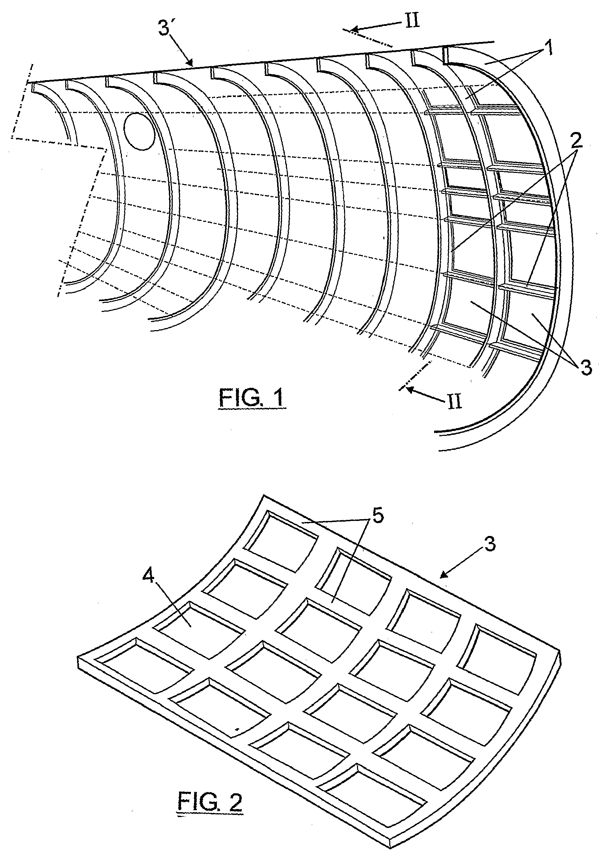

Figure 1 shows an inner perspective view of an airplane, which includes a resistant structure composed of transverse formers 1 and stringers 2 whereto the plates 3 of figure 2 that form a lining 3' are fastened.

Figure 2 shows an inner perspective view of one of these plates 3, which have recessed areas 4, called bays, limited by non-recessed strips 5 that determine a network of ribs coincident with the formers 1 and stringers 2 for fastening thereto. The bays 4 allow a reduction in weight of the lining plates 3.

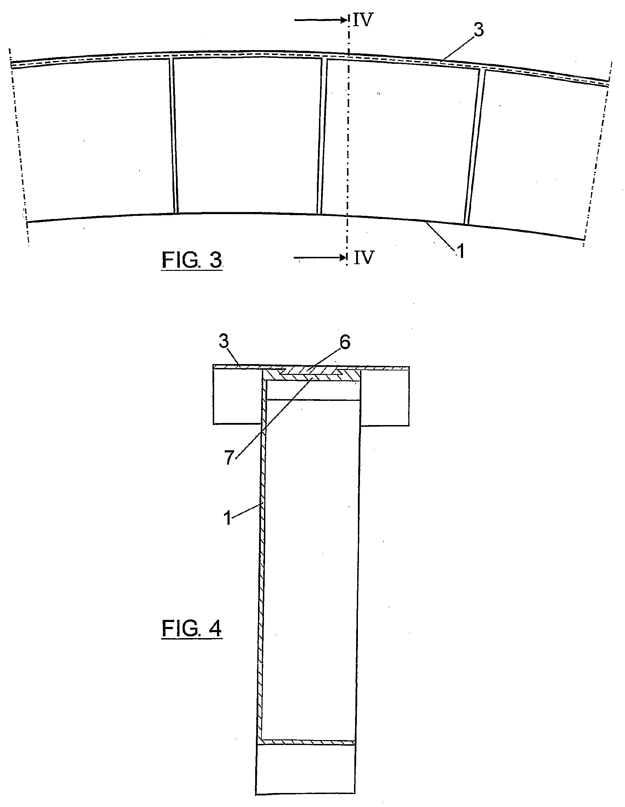

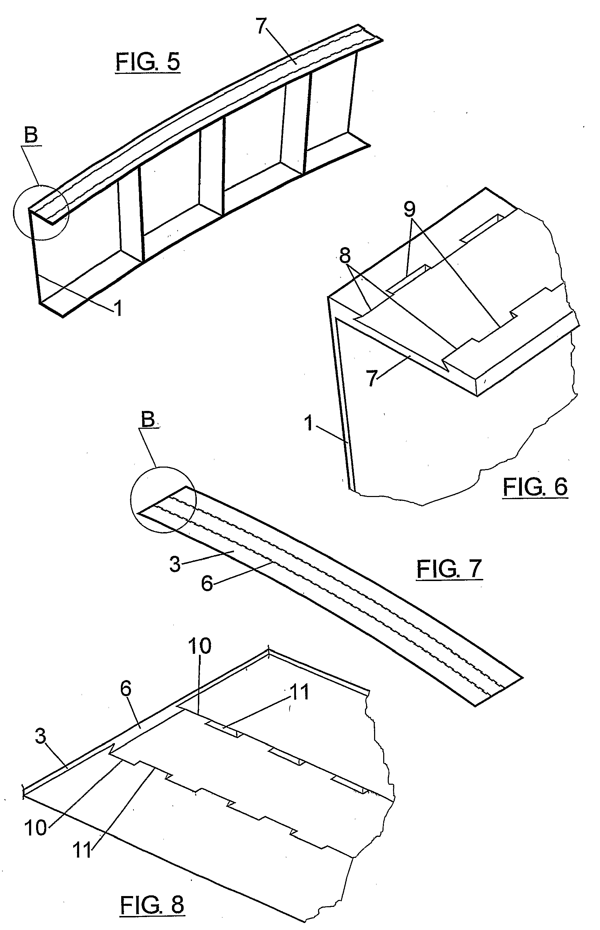

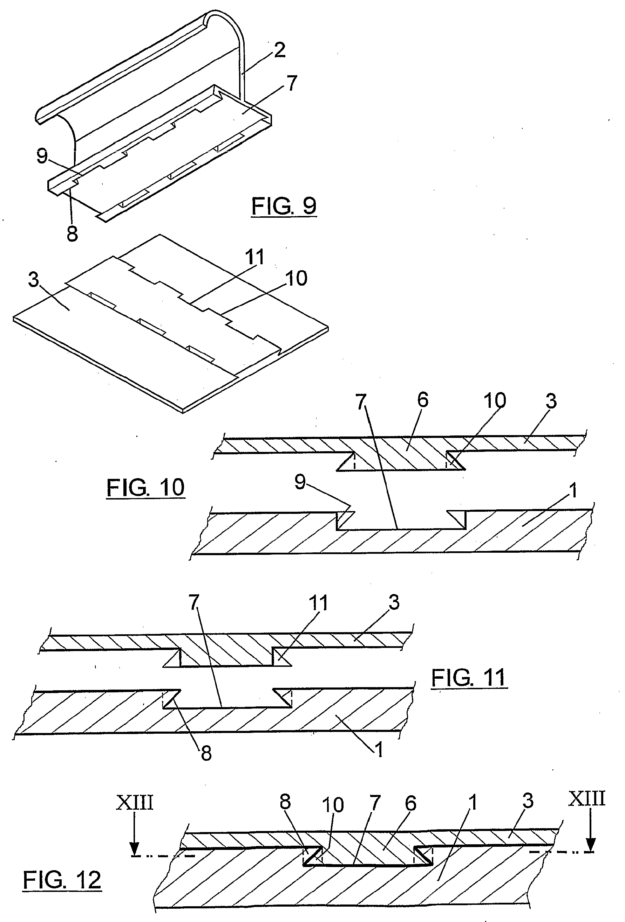

According to the present invention, the structural elements whereto the lining 3' plates 3 are fastened, defined in figure 1 by the formers 1 and stringers 2, in addition to the lining plates 3 include joining means which, as can be observed in figures 3 and 4, are defined by male 6 and female 7 dovetail formations. The male 6 formations will preferably form part of the lining plates, being obtained along at least part of the ribs 5 that limit the bays 4, without reaching the knots or crosspoints of said ribs, while the female 7 formations will be disposed on the structural elements, for example on the formers 1 shown in figures 3 and in the stringers 2 shown in figure 9. In addition to the formers and stringers, any type of element or equipment that requires fastening to the lining can be fastened thereto using this invention, shaping the corresponding parts of the male and female formations in the contact areas of the parts to be joined. The male 6 and female 7 formations will be discontinuous, as can be observed in figures 5 and 8, wherein the female formations 7 determine projections 8 and recesses 9, figures 5 and 6, while the male 6 formations of the lining plates 3 determine projections 10 and recesses 11, the projections 8 and recesses 9 of the female formations being coincident in number, position and dimensions with the projections 10 and recesses 11, respectively, of the male 6 formations of the lining plates 3. The male 6 formations of the lining plates 3 and female 7 formations of the stringers 2 will adopt the same layout, as shown in figure 9.

The projections and recesses of the male and female formations determine a crenellation wherein recesses 9 and 11 will allow a reduction in the weight of the male and female formations. Both the male 6 and female 7 formations and recesses 9 and 11 will preferably be obtained by means of mechanical milling, simultaneously carrying out the milling operation of the male 6 formation and the recessing of the lining plate 3 bays 4.

In order to couple or join the lining plates 3 to the structural elements, defined in the example represented in figure 1 by the formers 1 and stringers 2, the projections 10 of the male 6 formations of the lining 3' plates 3 are disposed in opposition to the recesses 9 of the female 7 formations of the structural elements, for example of the formers 1, as shown in figure 10, while simultaneously disposing the recesses 11 of the male 6 formations of the lining plates 3 in opposition to the projections 8 of the female 7 formations of the structural elements, as shown in figure 11. In this situation, the lining plates 3 are joined to the structural elements 1 so that the male 6 formations are introduced into the female 7 formations in the position described in figures 10 and 11. The plates 3 are then made to longitudinally slide against the structural elements 1, in such a manner that the projections 10 of the male 6 formations are disposed under the projections 8 of the structural elements, as shown in figure 12, thereby completing the dovetail joint between the lining plates 3 and the structural elements defined by the formers 1 and stringers 2. This system allows a tight fit that practically prevents separation or sliding between the lining plates and structural elements. For greater security, immobilising means consisting of adhesive substances or plastic deformations made, for example, in the female formations or auxiliary immobilising elements such as wedges or pressure screws, may be applied to this joint.

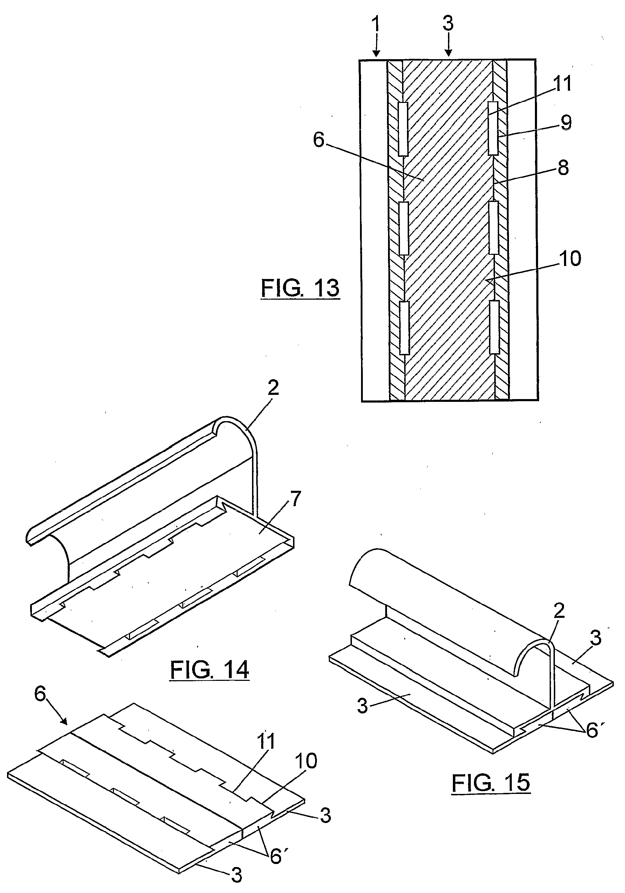

Figure 13 shows the final position of the projections and recesses of the male and female formations upon being disposed in the coupling position. The projections 10 of the male 6 formations are disposed in a position coincident with the projections 8 of the female 7 projections and underneath these, as described with reference to figure 12, while the recesses 9 of the female 7 formations of the structural elements are disposed in opposition to the recesses 11 of the male 6 formations of the lining plates.

Although the previously described example corresponds to the joint between the plates and structural elements of the fuselage of an airplane, the joining system of the invention may be applied to the wing and other surfaces, such as stabilisers and large-scale fairing. The joining system of the invention may also be applied to sectors other than the aeronautical sector, wherein, as mentioned earlier, cleanup, friction minimisation and non-perforation of outer surfaces are desirable basic characteristics.

The system of the invention also allows lateral joints between the lining plates 3, using the formers 1 and stringers 2, as shown in figures 14 and 15, where two lining plates 3 are disposed in abutment with each other, each of which includes half 6' of the male 6 formations, and each of said halves having the corresponding projections 10 and recesses 11. In this position, the full male 6 formation is coupled to the female 7 formation of a stringer 2, for example, in the same manner as described, whereupon the two lining plates 3 are joined by means of the stringer or structural element coincident with the male 6 formation.

The male 6 and female 7 formations may be shaped into auxiliary metal profiles that are incorporated and fastened to the parts to be joined, which will include these formations. This embodiment would be particularly applicable when the linings and structural elements are obtained from compound materials. The aforementioned metal profiles will be embedded, at least partially, in the corresponding parts. The aforementioned profiles can be obtained by means of extrusion.

As it will be understood, in order to prevent tension concentrations, all the longitudinal angles and edges of the formations will be rounded off.

## Claims

1. Aircraft structure assembly comprising:
plates (3) having recessed areas and strips along their inner surface,
structural elements (1, 2),
joining means for establishing the joint between said plates (3) and said structural elements (1, 2), comprising male (6) and female (7) dovetailed formations, one of said formations being defined along at least part of the strips of said plates (3) and the other formations being defined on sections of the structural elements (1, 2) coincident with said strips, and
inmobilising means that prevent relative sliding between the male (6) and female (7) dovetail formations,
**characterized in that**
the male (6) dovetail formations are fitted with projections (10) and recesses (11) alternatively defined in each lateral edge, and the female (7) dovetail formations are fitted with corresponding recesses (9) and projections (8) alternatively defined in each inner lateral edge,
wherein said projections (10, 8) and recesses (9, 11) are defined in number, position and dimensions in each male or female formation in such a manner that they may be coupled, by the opposition and insertion of the projections (10, 8) of one male or female formation into the recesses (9, 11) of the other female of male formation, and relative longitudinal sliding therebetween until the projections (10) of the male (6) formations are disposed in opposition to each other and underneath the projections (8) of the female (7) formations and recesses (9, 11) of both formations (6, 7) are positioned in opposition to each other.

2. Aircraft structure assembly according to claim1 **characterized in that** the dovetail male (6) and female (7) formations form a single milled alloy piece with the corresponding plate or structural element.

3. Aircraft structure assembly, according to claim 2, **characterised in that** the male (6) formations are milled on the plates (3) and the female formations are milled on the structural elements (1, 2).

4. Aircraft structure assembly, according to claim 1, **characterised in that** the immobilising means consist of an adhesive substance applied between the male (6) and female (7) formations.

5. Aircraft structure assembly, according to claim 1, **characterised in that** the immobilising means consist of plastic deformations applied at least to one of the male (6) or female (7) formations.

6. Aircraft structure assembly, according to claim 1, **characterised in that** at least part of the male (6) formations are defined between the edges of two consecutive plates (3).

7. Aircraft structure assembly, according to claim 1, **characterised in that** the recesses (11, 9) of the male (6) and female (7) formations are longer than the projections (10, 8) of the male (6) and female (7) formations.

8. Aircraft structure assembly, according to claim 1, **characterised in that** the male (6) and female (7) formations have a coincident curved path.

9. Aircraft structure assembly, according to claim 1, **characterised in that** all the longitudinal angles and edges of the male (6) and female (7) formations have a rounded profile.

10. Aircraft structure assembly according to any of claims 1 or 4-9 **characterized in that** the plates (3) are made of composite material and the dovetailed formations are defined in corresponding auxiliary metal profiles at least partially embedded in the contact areas of said plates (3) and in the structural elements (1, 2).

## Patentansprüche

1. Flugzeugstrukturanordnung, die Folgendes umfasst:
Platten (3), die entlang ihrer Innenfläche Aussparungen und Leisten aufweisen,
Strukturelemente (1, 2),
Verbindungsmittel zur Herstellung einer Verbindung zwischen den besagten Platten (3) und den besagten Strukturelementen (1, 2), die vorstehende (6) und zurückspringende (7) schwalbenschwanzförmige Gebilde umfassen, wobei eins der besagten Gebilde entlang mindestens eines Teils der Leisten der besagten Platten (3) definiert ist und das andere Gebilde in Übereinstimmung mit den besagten Leisten an Abschnitten der Strukturelemente (1, 2) definiert ist, und
Immobilisierungsmittel, die die relative Verschiebung zwischen den vorstehenden (6) und den zurückspringenden (7) schwalbenschwanzförmigen Gebilden verhindern,
**dadurch gekennzeichnet, dass**
die vorstehenden (6) schwalbenschwanzförmigen Gebilde mit alternativ an jeder Seitenkante definierten Vorsprüngen (10) und Aussparungen (11) ausgestattet sind und die zurückspringenden (7) schwalbenschwanzförmigen Gebilde mit entsprechenden, alternativ an jeder inneren Seitenkante definierten Aussparungen (9) und Vorsprüngen (8) ausgestattet sind,
wobei die besagten Vorsprünge (10, 8) und Aussparungen (9, 11) in jedem vorstehenden oder zurückspringenden Gebilde bezüglich Anzahl, Position und Abmessungen derart definiert sind, dass sie durch Gegenüberstellung und Einfügen der Vorsprünge (10, 8) eines vorstehenden oder zurückspringenden Gebildes in die Aussparungen (9, 11) des anderen zurückspringenden oder vorstehenden Gebildes und deren relativen Längsverschiebung zusammengefügt werden, bis die Vorsprünge (10) der vorstehenden (6) Gebilde einander gegenüber und unterhalb der Vorsprünge (8) der zurückspringenden (7) Gebilde zu liegen kommen und die Aussparungen (9, 11) beider Gebilde (6, 7) sich einander gegenüber befinden.

2. Flugzeugstrukturanordnung nach Anspruch 1, **dadurch gekennzeichnet, dass** die vorstehenden (6) und zurückspringenden (7) schwalbenschwanzförmigen Gebilde mit der entsprechenden Platte oder dem entsprechenden Strukturelement ein einstückiges gefrästes Legierungsteil bilden.

3. Flugzeugstrukturanordnung nach Anspruch 2, **dadurch gekennzeichnet, dass** die vorstehenden (6) Gebilde an den Platten (3) gefräst werden und die zurückspringenden Gebilde an den Strukturelementen (1, 2) gefräst werden.

4. Flugzeugstrukturanordnung nach Anspruch 1, **dadurch gekennzeichnet, dass** die Immobilisierungsmittel aus einer Haftsubstanz bestehen, die zwischen die vorstehenden (6) und zurückspringenden (7) Gebilde aufgetragen wird.

5. Flugzeugstrukturanordnung nach Anspruch 1, **dadurch gekennzeichnet, dass** die Immobilisierungsmittel aus plastischen Verformungen bestehen, die mindestens auf eines der vorstehenden (6) oder zurückspringenden (7) Gebilde aufgetragen werden.

6. Flugzeugstrukturanordnung nach Anspruch 1, **dadurch gekennzeichnet, dass** mindestens ein Teil der vorstehenden (6) Gebilde zwischen den Kanten zweier aufeinander folgenden Platten (3) definiert ist.

7. Flugzeugstrukturanordnung nach Anspruch 1, **dadurch gekennzeichnet, dass** die Aussparungen (11,9) der vorstehenden (6) und zurückspringenden (7) Gebilde länger sind als die Vorsprünge (10, 8) der vorstehenden (6) und zurückspringenden (7) Gebilde.

8. Flugzeugstrukturanordnung nach Anspruch 1, **dadurch gekennzeichnet, dass** die vorstehenden (6) und zurückspringenden (7) Gebilde eine übereinstimmende Kurvenbahn aufweisen.

9. Flugzeugstrukturanordnung nach Anspruch 1, **dadurch gekennzeichnet, dass** sämtliche Längsneigungen und -kanten der vorstehenden (6) und zurückspringenden (7) Gebilde ein abgerundetes Profil aufweisen.

10. Flugzeugstrukturanordnung nach einem der Ansprüche 1 oder 4 bis 9, **dadurch gekennzeichnet, dass** die Platten (3) aus Verbundmaterial hergestellt sind und die schwalbenschwanzförmigen Gebilde in entsprechenden zusätzlichen Metallprofilen definiert sind, die mindestens teilweise in den Kontaktflächen der besagten Platten (3) und den Strukturelementen (1, 2) eingebettet sind.

## Revendications

1. Assemblage de structure d'avion comprenant :
des plaques (3) présentant des zones évidées et des bandes le long de leur surface interne,
des éléments structuraux (1, 2),
des moyens de jonction prévus pour effectuer la jonction entre lesdites plaques (3) et lesdits éléments structuraux (1, 2), qui comprennent des formations en queue-d'aronde mâles (6) et femelles (7), l'une desdites formations étant définie le long d'au moins une partie des bandes desdites plaques (3) et les autres formations étant définies sur des sections des éléments structuraux (1, 2) coïncidant avec lesdites bandes, et
des moyens d'immobilisation qui empêchent les glissements respectifs des formations en queue d'aronde mâles (6) et femelles (7),
**caractérisé en ce que**
les formations en queue d'aronde mâles (6) sont munies de saillies (10) et d'évidements (11) qui peuvent être définis dans chaque rebord latéral, et les formations en queue d'aronde femelles (7) sont munies des évidements (9) et saillies (8) correspondants qui peuvent être définis dans chaque rebord latéral interne,
où lesdites saillies (10, 8) et évidements (9, 11) sont définis en fonction de leur nombre, position et dimensions dans chaque formation mâle ou femelle de telle sorte qu'ils puissent être couplés, par l'opposition et l'insertion des saillies (10, 8) d'une formation mâle ou femelle à l'intérieur des évidements (9, 11) de l'autre formation femelle ou mâle, et le glissement longitudinal relatif entre celles-ci jusqu'à ce que les saillies (10) des formations mâles (6) soient placées en opposition l'une par rapport à l'autre et sous les saillies (8) des formations femelles (7) et que les évidements (9, 11) des deux formations (6, 7) soient placés en opposition l'un par rapport à l'autre.

2. Assemblage de structure d'avion conformément à la revendication 1, **caractérisé en ce que** les formations en queue d'aronde mâles (6) et femelles (7) forment une seule pièce en alliage fraisée avec la plaque ou l'élément structural correspondant.

3. Assemblage de structure d'avion, selon la revendication 2, **caractérisé en ce que** les formations mâles (6) sont fraisées sur les plaques (3) et les formations femelles sont fraisées sur les éléments structuraux (1, 2).

4. Assemblage de structure d'avion, selon la revendication 1, **caractérisé en ce que** les moyens d'immobilisation se composent d'une substance adhésive appliquée entre les formations mâles (6) et femelles (7).

5. Assemblage de structure d'avion, selon la revendication 1, **caractérisé en ce que** les moyens d'immobilisation se composent de déformations plastiques appliquées au moins à l'une des formations mâles (6) ou femelles (7).

6. Assemblage de structure d'avion, selon la revendication 1, **caractérisé en ce qu'**au moins une partie des formations mâles (6) est définie entre les rebords de deux plaques consécutives (3).

7. Assemblage de structure d'avion, selon la revendication 1, **caractérisé en ce que** les évidements (11, 9) des formations mâles (6) et femelles (7) sont plus longs que les saillies (10, 8) des formations mâles (6) et femelles (7).

8. Assemblage de structure d'avion, selon la revendication 1, **caractérisé en ce que** les formations mâles (6) et femelles (7) ont une trajectoire courbe coïncidente.

9. Assemblage de structure d'avion, selon la revendication 1, **caractérisé en ce que** tous les angles longitudinaux et les rebords des formations mâles (6) et femelles (7) ont un profil arrondi.

10. Assemblage de structure d'avion selon l'une quelconque des revendications 1 ou 4 à 9, **caractérisé en ce que** les plaques (3) sont fabriquées en matériau composite et les formations en queue-d'aronde sont définies dans des profilés métalliques auxiliaires correspondants, qui sont noyés au moins partiellement dans les zones de contact desdites plaques (3) et dans les éléments structuraux (1, 2).
